# EUROPÄISCHE PATENTSCHRIFT

(11) **EP 3 332 468 B1**
(45) Veröffentlichungstag und Bekanntmachung des Hinweises auf die Patenterteilung: **05.08.2020**
(21) Anmeldenummer: 16728016.3
(22) Anmeldetag: 09.06.2016
(51) Int. Cl.: H02J 50/12, H02M 3/337

(54) **INDUKTIONSLADEGERÄT ZUR INDUKTIVEN ENERGIEÜBERTRAGUNG AUF EINE INDUKTIONSAKKUVORRICHTUNG SOWIE VERFAHREN ZUM INDUKTIVEN AUFLADEN EINER INDUKTIONSAKKUVORRICHTUNG**
INDUCTION CHARGING DEVICE FOR INDUCTIVELY TRANSMITTING ENERGY TO AN INDUCTION BATTERY DEVICE, AND METHOD FOR INDUCTIVELY CHARGING AN INDUCTION BATTERY DEVICE
APPAREIL DE CHARGE PAR INDUCTION POUR LA TRANSMISSION D'ÉNERGIE PAR INDUCTION À UN DISPOSITIF ACCUMULATEUR À INDUCTION AINSI QUE PROCÉDÉ DE CHARGE PAR INDUCTION D'UN DISPOSITIF ACCUMULATEUR À INDUCTION

(30) Priorität: 03.08.2015 DE 102015214774
(43) Veröffentlichungstag der Anmeldung: 13.06.2018
(73) Patentinhaber: Robert Bosch GmbH, 70442 Stuttgart (DE)
(72) Erfinder: WIRNITZER, Bernd, 71292 Friolzheim (DE); GONDA, Martin, 70191 Stuttgart (DE); LOHR, Guenter, 70771 Leinfelden-Echterdingen (DE); MACK, Juergen, 73035 Goeppingen (DE); KRUPEZEVIC, Dragan, 70565 Stuttgart (DE)
(86) Internationale Anmeldenummer: PCT/EP2016/063115
(87) Internationale Veröffentlichungsnummer: WO 2017/021035

(56) Entgegenhaltungen:
- EP-A1- 2 868 516
- DE-A1-102013 212 611
- US-A1- 2013 147 280

## Beschreibung

### Stand der Technik

Die Erfindung betrifft ein Induktionsladegerät zur induktiven Energieübertragung auf eine Induktionsakkuvorrichtung sowie ein Verfahren zum induktiven Aufladen einer Induktionsakkuvorrichtung nach der Gattung der unabhängigen Ansprüche.

Aus der DE 102013212611 A1 ist eine Induktionsladevorrichtung, insbesondere eine Handwerkzeugsinduktionsladevorrichtung mit einem Induktionsladegerät zum induktiven Laden einer Induktionsakkuvorrichtung bekannt. Die induktive Energieübertragung erfolgt dabei über eine primären Schwingkreisschaltung in dem Induktionsladegerät und einer sekundären Schwinkgreisschaltung in der Induktionsakkuvorrichtung. Die Schwingkreisschaltungen sind induktiv über zumindest eine primärseitige und eine sekundärseitige Ladespule miteinander gekoppelt, wobei die Resonanzfrequenzen der Schwingkreisschaltungen idealerweise näherungsweise gleich sind. Die Anregung der primären Schwingkreisschaltung erfolgt über ein von Halbwellen gebildetes Rechtecksignal, das im Induktionsladegerät von einem Wechselrichter erzeugt wird. Der Wechselrichter wird dazu entsprechend von einer Steuer- oder Regeleinheit angesteuert, wobei die Frequenz des anregenden Rechtecksignals typischerweise etwas oberhalb der Resonanzfrequenz der Schwingkreisschaltungen liegt. Dies bietet den großen Vorteil eines so genannten quasiresonanten Betriebs mit entsprechend geringen EMV-Störpegeln und Energieverlusten.

Bekannt ist ferner, dass nur diejenige Harmonische des anregenden Signals, die in der Nähe der Resonanzfrequenz des Systems liegt, zu einem signifikanten Ladestrom beiträgt. Dies ist die Grundschwingung des Rechtecksignals. Weiterer Stand der Technik ist aus EP 2 868 516 A1 und US 2013/147280 A1 bekannt.

In der DE 102010003703 A1 ist ein so genanntes IU- oder CCCV-Ladeverfahren (Constant Current Constant Voltate) zum Laden eines Akkus, insbesondere eines Lithium-Ionen-Akkus offenbart. Bei diesem Verfahren werden die Akkus in einer ersten Phase (I-Ladung) bei konstantem Strom geladen, während die Ladespannung ansteigt. Der Strom wird dabei durch einen Stromregler des Ladegeräts begrenzt. Nach Erreichen einer gewählten Ladeschlussspannung an dem Akku wird in einer zweiten Phase von der Konstant-Stromregelung auf eine Spannungsregelung umgeschaltet (U-Ladung), bei der die Akkus mit konstanter Spannung und reduziertem Ladestrom weitergeladen werden. Diese zweite Phase wird auch als Stromschwanz (current tail) bezeichnet.

Um im Stromschwanz die anregende Spannung nicht weiter anwachsen zu lassen, wird bei den bekannten Induktionsladegeräten das Tastverhältnis des anregenden Signals reduziert. Damit gehen jedoch die Vorteile des quasiresonanten Betriebs verloren.

Aufgabe der Erfindung ist es daher, im Stromschwanz (zweite Phase) einen gegenüber dem Ladestrom der I-Ladung (erste Phase) reduzierten Ladestrom zu realisieren, ohne dass der quasiresonante Betrieb verlassen wird.

### Vorteile der Erfindung

Erfindungsgemäß ist vorgesehen, dass die Steuer- oder Regeleinheit die Wechselrichterschaltung nach dem Erreichen einer Ladeschlussspannung der Induktionsakkuvorrichtung zur Verringerung des Ladestroms derart ansteuert, dass das Ausgangssignal periodisch zumindest eine erste Halbwelle auf einen hohen Wert und unmittelbar daran anschließend eine ungerade Mehrzahl aufeinander folgender Halbwellen auf einen gegenüber dem hohen Wert verringerten Wert gesetzt ist. Damit sind im Stromschwanz kleinere Ladeströme unter Beibehaltung des quasiresonanten Betriebs mit den bekannten Vorteilen möglich.

Unter einer Wechselrichterschaltung wird insbesondere eine Halbbrücke mit einem Highside- und einem Lowside-Schalter verstanden. Es sind aber auch andere Wechselrichterschaltungen beispielsweise in Form von H-Brücken denkbar. Als Highside- und/oder Lowside-Schalter kommen in der Regel Bipolar- oder MOS-Feldeffekttransistoren oder auch Mischformen wie IGBTs zum Einsatz. Die Erfindung ist jedoch weder auf die genaue Ausgestaltung der Wechselrichterschaltung noch auf die darin verwendeten Schalter beschränkt.

Das anregende Ausgangssignal der Wechselrichterschaltung ist in der Regel ein Rechtecksignal, kann aber auch andere pulsweitenmodulierte (PWM) Signalformen annehmen, bei denen sich die Werte der Schaltzustände unterscheiden. Im Falle eines Rechtecksignals ist es üblich, dass sich ein hoher Wert (Impuls) bei Durchschalten des Highside- und Sperren des Lowside-Schalters ergibt, während ein gegenüber dem hohen Wert geringere Wert (Pause) durch das Sperren des Highside- und Durchschalten des Lowside-Schalters realisiert wird. Üblicherweise werden der hohe Wert auch mit "High" und der gegenüber dem hohen Wert geringere Wert mit "Low" bezeichnet. Dem Fachmann sind derartige PWM-Signale bekannt, so dass hier nicht näher darauf eingegangen werden soll. Entsprechendes gilt für die Frequenz eines derartigen Signals sowie den damit in Verbindung stehenden Halbwellen, Perioden-, Impuls- und Pausendauern. Zum Teil soll hierauf auch noch in der nachfolgenden Beschreibung näher eingegangen werden.

Erfindungsgemäß ist vorgesehen, dass periodisch einer ersten Halbwelle mit einem hohen Wert mindestens drei Halbwellen mit gegenüber dem hohen Wert verringertem Wert aufeinander folgen. Auf diese Weis kann ein gegenüber dem Ladestrom der ersten Phase um die Hälfte geringerer Ladestrom in der zweiten Phase erzielt werden. Eine weitere Reduzierung des Ladestroms auf ein Drittel des Ladestroms der ersten Phase ist erfindungsgemäss erreichbar, wenn in der zweiten Phase periodisch einer ungeraden Anzahl aufeinander folgender erster Halbwellen, insbesondere dreier Halbwellen, mit einem hohen Wert mindestens drei Halbwellen mit gegenüber dem hohen Wert verringertem Wert aufeinander folgen.

Mit besonderem Vorteil hinsichtlich des quasiresonanten Betriebs hält die Steuer- oder Regeleinheit die anregende Frequenz des Ausgangssignals der Wechselrichterschaltung nach dem Erreichen der Ladeschlussspannung im Wesentlichen konstant. Es kann aber insbesondere in Verbindung mit der Kombination einer ungeraden Anzahl aufeinander folgender Halbwellen mit hohem Wert und einer ungeraden Anzahl aufeinanderfolgender Halbwellen mit gegenüber dem hohen Wert verringertem Wert zur weiteren Reduzierung des Ladestroms vorteilhaft sein, wenn der quasiresonante Betrieb durch Verstimmen der anregenden Frequenz verlassen wird. Dieser Betriebsmodus soll im Folgenden als Frequenzshift bezeichnet werden.

Weiterhin wird eine Induktionsladevorrichtung, insbesondere eine Handwerkzeugsinduktionsladevorrichtung, mit zumindest einem erfindungsgemäßen Induktionsladegerät und einer durch das Induktionsladegerät zu ladenden Induktionsakkuvorrichtung vorgeschlagen.

Die Erfindung betrifft auch ein Verfahren zum induktiven Aufladen einer Induktionsakkuvorrichtung mittels eines eine Wechselrichterschaltung und zumindest eine primäre Schwingkreisschaltung aufweisenden Induktionsladegeräts. Das erfindungsgemäße Verfahren mit den eingangs geschilderten Vorteilen weist dazu die folgenden Schritte auf:
- Laden der Induktionsakkuvorrichtung in einer ersten Phase mit einem im Wesentlichen konstanten Ladestrom derart, dass eine anregende Frequenz eines aus Halbwellen bestehenden Ausgangssignals der Wechselrichterschaltung zur Ansteuerung der primären Schwingkreisschaltung im Wesentlichen einer Resonanzfrequenz der primären Schwingkreisschaltung entspricht,
- Laden der Induktionsakkuvorrichtung nach dem Erreichen einer Ladeschlussspannung der Induktionsakkuvorrichtung in einer zweiten Phase mit einem gegenüber dem Ladestrom der ersten Phase verringerten Ladestrom derart, dass periodisch das Ausgangssignal der Wechselrichterschaltung zumindest eine erste Halbwelle auf einen hohen Wert und unmittelbar daran anschließend eine ungerade Mehrzahl von aufeinander folgenden Halbwellen auf einen gegenüber dem hohen Wert verringerten Wert gesetzt wird.

Dabei ist vorgesehen, dass einer ersten Halbwelle mit einem hohen Wert mindestens drei Halbwellen mit gegenüber dem hohen Wert verringertem Wert aufeinander folgen. Erfindungsgemäss ist hierbei vorgesehen, dass einer ungeraden Anzahl aufeinander folgender erster Halbwellen mit einem hohen Wert mindestens drei Halbwellen mit gegenüber dem hohen Wert verringertem Wert aufeinander folgen.

Das Verfahren sieht vor, dass die anregende Frequenz des Ausgangssignal der Wechselrichterschaltung nach dem Erreichen der Ladeschlussspannung im Wesentlichen konstant bleibt. Zur weiteren Reduzierung des Ladestroms kann die anregende Frequenz des Ausgangssignals der Wechselrichterschaltung nach dem Erreichen der Ladeschlussspannung gegenüber der Resonanzfrequenz aber auch verstimmt werden.

Weitere Vorteile der Erfindung ergeben sich durch die in den abhängigen Ansprüchen angegebenen Merkmale sowie aus der Zeichnung und der nachfolgenden Beschreibung.

### Ausführungsbeispiele

### Zeichnung

Die Erfindung wird im Folgenden anhand der Figuren 1 bis 5 beispielhaft erläutert, wobei gleiche Bezugszeichen in den Figuren auf gleiche Bestandteile mit einer gleichen Funktionsweise hindeuten.

Es zeigen
- Fig. 1:: ein Blockschaltbild einer erfindungsgemäßen Induktionsladevorrichtung mit einem erfindungsgemäßen Induktionsladegerät zur induktiven Ladung einer Induktionsakkuvorrichtung,
- Fig. 2:: ein Zeitdiagramm eines IU-Ladeverfahrens nach dem Stand der Technik,
- Fig. 3:: ein Diagramm des zeitlichen Verlaufs eines Ausgangssignals einer Wechselrichterschaltung zur Ansteuerung einer Schwingkreisschaltung während einer ersten Phase des IU-Ladeverfahrens,
- Fig. 4:: ein Diagramm des zeitlichen Verlaufs eines erfindungsgemäßen Ausgangssignals der Wechselrichterschaltung zur Ansteuerung der Schwingkreisschaltung während einer zweiten Phase des IU-Ladeverfahrens in einem ersten Ausführungsbeispiel,
- Fig. 5:: ein Diagramm des zeitlichen Verlaufs eines erfindungsgemäßen Ausgangssignals der Wechselrichterschaltung zur Ansteuerung der Schwingkreisschaltung während einer zweiten Phase des IU-Ladeverfahrens in einem zweiten Ausführungsbeispiel und
- Fig. 6:: ein Diagramm des zeitlichen Verlaufs eines erfindungsgemäßen Ausgangssignals der Wechselrichterschaltung zur Ansteuerung der Schwingkreisschaltung während einer zweiten Phase des IU-Ladeverfahrens in einem Drittel Ausführungsbeispiel.

### Beschreibung der Ausführungsbeispiele

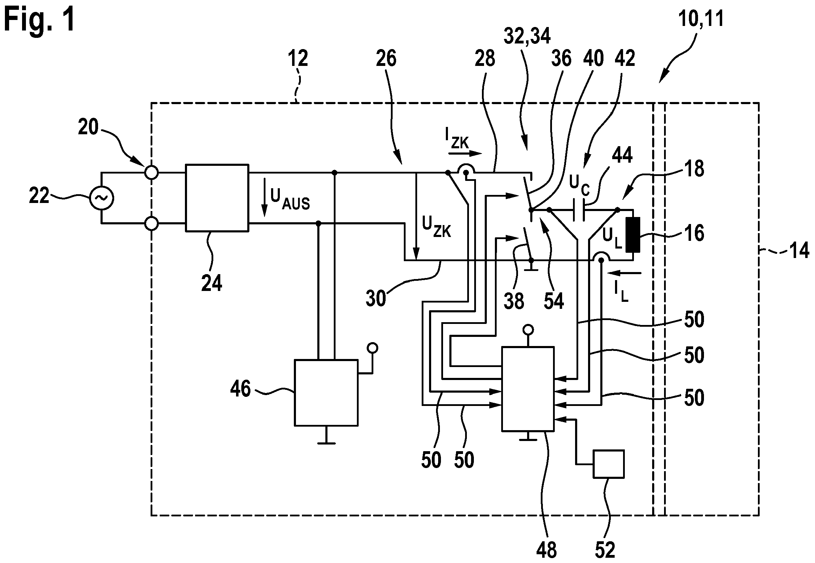

Figur 1 zeigt eine erfindungsgemäße Induktionsladevorrichtung 10, insbesondere in Form einer Handwerkzeugsinduktionsladevorrichtung 11, mit einem Induktionsladegerät 12 und einer induktiv zu ladenden Induktionsakkuvorrichtung 14. Das Induktionsladegerät 10 bildet die Primärseite der Induktionsladevorrichtung 10, während die Induktionsakkuvorrichtung 14 dessen Sekundärseite darstellt. Typischerweise können verschiedenste Arten von Handwerkzeugen induktiv geladen werden. Dazu gehören ohne Einschränkung der Erfindung beispielsweise, Schrauber, Bohrmaschinen, Schlagbohrmaschinen, Hämmer, Winkelschleifer, Exzenterschleifer, Stichsägen, Handkreissägen, Säbelsägen, Poliermaschinen, etc., aber auch Gartengeräte, wie Rasenmäher, Heckenscheren oder Beleuchtungseinrichtungen für Baustellen. Grundsätzlich ist die Erfindung auf alle möglichen induktiv geladenen Handwerkzeuge mit fest eingebauten oder wechselbaren Akkus anwendbar.

Ebenso kann sie aber auch für andere dem Fachmann als sinnvoll erscheinende Induktionsakkuvorrichtungen angewendet werden.

In der Regel ist die Induktionsakkuvorrichtung 14, auf die hier nicht näher eingegangen werden soll, da sie dem Fachmann allgemein bekannt ist, auf einer Oberseite eines nicht gezeigten Gehäuses des Induktionsladegeräts 10 aufgestellt und wird über eine Ladespule 16, die Teil einer primären Schwingkreisschaltung 18 ist, drahtlos geladen. Die Induktionsakkuvorrichtung 14 weist hierzu eine nicht dargestellte sekundäre Schwingkreisschaltung mit einer weiteren Spule zum Empfangen der primärseitig abgestrahlten Energie auf. Es sei erwähnt, dass die Induktionsakkuvorrichtung 14 nicht unbedingt auf das Gehäuse des Induktionsladegeräts 10 aufgestellt werden muss.

Das Induktionsladegerät 10 wird netzseitig in bekannter Weise über einen Anschluss 20, beispielsweise einen Schutzkontaktstecker, an ein Wechselspannungsnetz 22 angeschlossen und mit Energie versorgt. Der Anschluss 20 ist mit einem Netzteil 24 verbunden, das eine Wechselspannung des Wechselspannungsnetzes 22 in eine Gleichspannung U_{AUS} transformiert und gleichgerichtet. Die Gleichspannung U_{AUS} dient zur Versorgung einer Zwischenkreisschaltung 26 als Zwischenkreisspannung U_{ZK} zwischen den Gleichstromzweigen 28 und 30, wobei der Gleichstromzweig 30 einem Massepotential (low) und der Gleichstromzweig 28 einem Versorgungspotential (high) entspricht. Zwischen den Gleichstromzweigen 28 und 30 ist eine Wechselrichterschaltung 32 in Form einer Halbbrücke 34 geschaltet, die aus einem Highside- und einem Lowside-Schalter 36 bzw. 38 besteht. Die Schalter 36, 38 der Wechselrichterschaltung 32 können als Bipolar- oder Metalloxid-Semiconductor-Feldeffekt-Transistoren (MOSFET) ausgebildet sein. Ebenso kommen aber auch Insulated-Gate-Bipolar-Transistoren (IGBT) oder dergleichen in Frage. An einem Mittenabgriff 40 der Wechselrichterschaltung 32 ist eine primäre Schwingkreisschaltung 42, die aus einem Kondensator 44 und der eingangs erwähnten, dazu in Reihe geschalteten Ladespule 16 besteht, derart gegen Massepotential mit dem Gleichstromzweig 30 verbunden, dass sie parallel zum Lowside-Schalter 38 liegt. Es ist aber ebenso denkbar, die Schwingkreisschaltung parallel zum Highside-Schalter 28 zu schalten.

Eine mit einer Hilfsspannungsversorgung 46 verbundene Regeleinheit 48 dient nun zur erfindungsgemäßen Ansteuerung der Schalter 36, 38 der Wechselrichterschaltung 32. Dabei kann im Prinzip auch auf die Hilfspannungsversorgung 46 verzichtet werden. Diese dient vornehmlich dazu, dass die Regeleinheit 48 auch nach Abschalten des Ladegeräts 12 in einem Standby-Modus arbeiten kann, um einen geringen Energieverbrauch sicherzustellen.

Die Regeleinheit 46 weist diverse Regeleingänge 50 auf, mit denen die Zwischenkreisspannung U_{ZK}, ein Zwischenkreisstrom I_{ZK}, eine Kondensatorspannung U_{C} über den Kondensator 44, eine Ladespannung U_{L} über der Ladespule 16 und ein Ladestrom I_{L} durch die Ladespule 16 und den Kondensator 44 überwacht werden. Über eine Schnittstelle 52 lassen sich ergänzend hierzu Informationen zum Ladezustand, zur Temperatur und/oder zum Energiebedarf der Induktionsakkuvorrichtung 14 einspeisen. Auch können Informationen über die Art und Anzahl der Akkuzellen der Indukionsakkuvorrichtung 14 übertragen werden. Die Schnittstelle 52 kann hierzu als drahtlose NFC- oder BTLE-Schnittstelle oder dergleichen ausgebildet sein. Auch eine Datenübertragung von der sekundärseitigen Spule zur primärseitigen Ladespule 16 ist denkbar. Grundsätzlich ist auch ein ungeregelter Betrieb des Induktionsladegeräts 12 denkbar, so dass die Regeleinheit 46 als reine Steuereinheit arbeitet. Im Allgemeinen ist aber ein geregelter Betreib vorzuziehen.

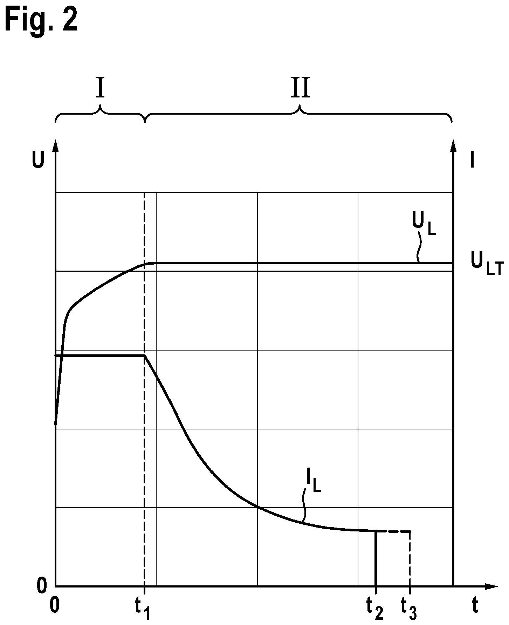

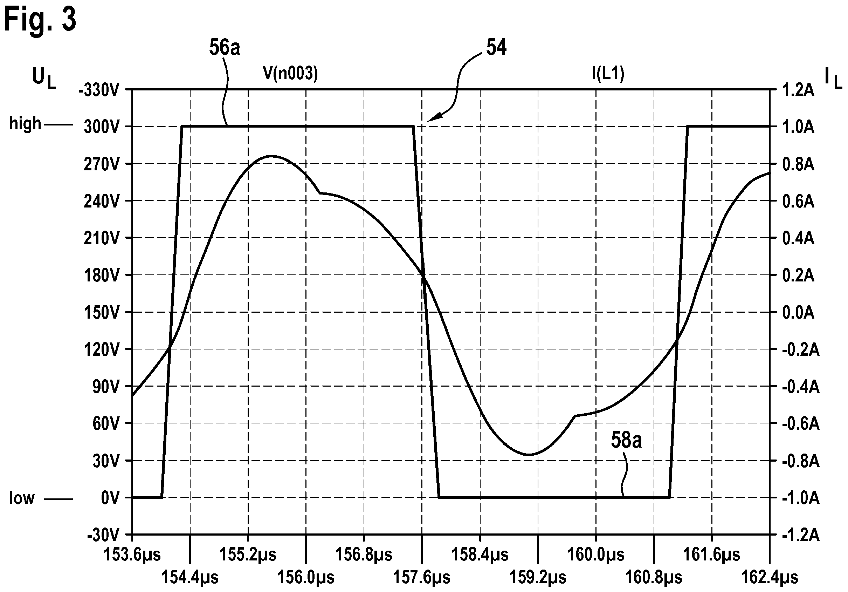

Mit Bezug auf die Figuren 2 und 3 steuert die Regeleinheit 46 die Highside- und Lowside-Schalter 36, 38 nun derart an, dass die Induktionsakkuvorrichtung 14 in einer ersten Phase I (Zeitraum t = 0 bis t₁) zunächst mit einem konstanten Ladestrom I_{L} geladen wird. Dazu zerhackt die Wechselrichterschaltung 32 die gleichgerichtete Zwischenkreisspannung U_{ZK} in eine Rechteckspannung an ihrem Mittenabgriff 40, die im Folgenden als Ausgangssignal 54 bezeichnet werden soll. Das Ausgangssignal 54 ist im vorliegenden Fall für eine Halbwelle 56a auf den Wert "high" und für eine nachfolgende Halbwelle 58a auf den Wert "low" geschaltet. Damit ergeben sich die maximal mögliche Ladespannung U_{L} und der maximale Ladestrom I_{L}. Es sind aber auch andere Impuls-Pausen-Verhältnisse und duty cycle des pulwseitenmodulierten Ausgangssignals 54 zum induktiven Laden mit geringeren Werten und längeren Ladezyklen möglich, um zum Beispiel die Induktionsakkuvorrichtung 14 stärker zu schonen.

In der ersten Phase I nimmt die Ladespannung U_{L} nun kontinuierlich zu. Wesentlich für eine optimale induktive Energieübertragung ist dabei der Betrieb der Wechselrichterschaltung 32 im quasiresonanten Betrieb, d.h., dass die anregende Frequenz fₐ ihres Ausgangssignals 54 im Wesentlichen einer Resonanzfrequenz f_{R} der primären Schwingkreisschaltung 18 entspricht, vorzugsweise etwas oberhalb der Resonanzfrequenz f_{R} liegt. Dazu ermittelt die Regeleinheit 46 ergänzend zu den obigen Größen in regelmäßigen Abständen die anregende Frequenz fₐ des Ausgangssignals 54 und die Resonanzfrequenz f_{R} der primären Schwingkreisschaltung 18.

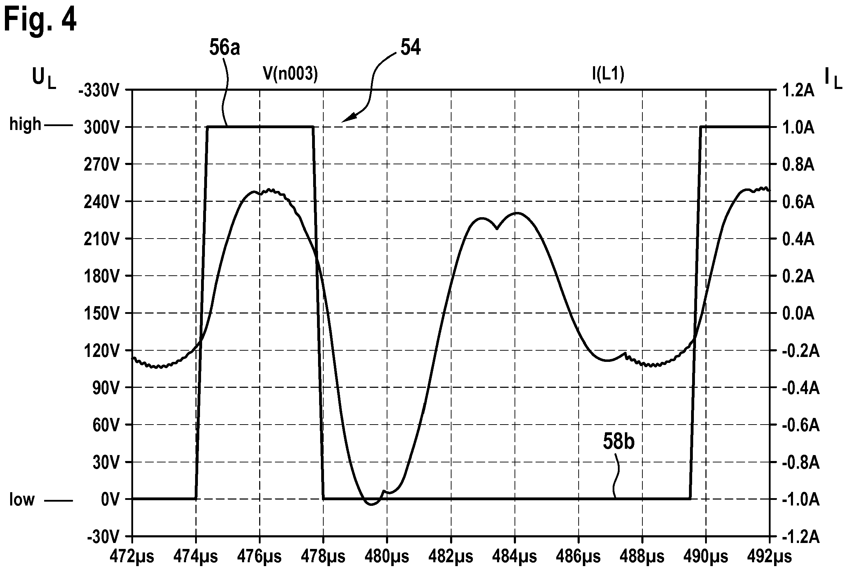

Sobald die Ladespannung U_{L} zum Zeitpunkt t₁ einen vorggebbaren Maximalwert, der im Folgenden als Ladeschlussspannung U_{LT} bezeichnet werden soll, erreicht hat, wird von dem stromgeregelten Ladeverfahren in ein spannungsgeregeltes Ladeverfahren umgeschaltet, indem in der auf die erste Phase I folgenden zweiten Phase II die Induktionsakkuvorrichtung 14 mit gegenüber dem Ladestrom I_{L} der ersten Phase I verringertem Ladestrom I_{L} bis zum Abschalten des Induktionsladegeräts 12 zu den Zeitpunkten t₂ oder t₃ geladen wird. Erfindungsgemäß ist hierzu mit Bezug auf Figur 4 vorgesehen, dass unter Beibehaltung des quasiresonanten Betriebs nach dem Erreichen der Ladeschlussspannung U_{LT} in der zweiten Phase II das Ausgangssignal 54 der Wechselrichterschaltung 18 periodisch zumindest eine erste Halbwelle auf einen hohen Wert "high" und unmittelbar daran anschließend eine ungerade Anzahl aufeinander folgender Halbwellen 58b auf einen gegenüber dem hohen Wert "high" verringerten Wert "low" gesetzt ist. In Figur 4 ist dies für den Fall einer Halbwelle "high" und drei unmittelbar daran angrenzender, aufeinander folgender Halbwellen "low" gezeigt. Gleichzeitig ist dem zeitlichen Verlauf des Ladestroms I_{L} zu entnehmen, dass dieser gegenüber dem in Figur 3 gezeigten Fall (eine Halbwelle "high" im Wechsel mit einer Halbwelle "low") um die Hälfte verringert ist.

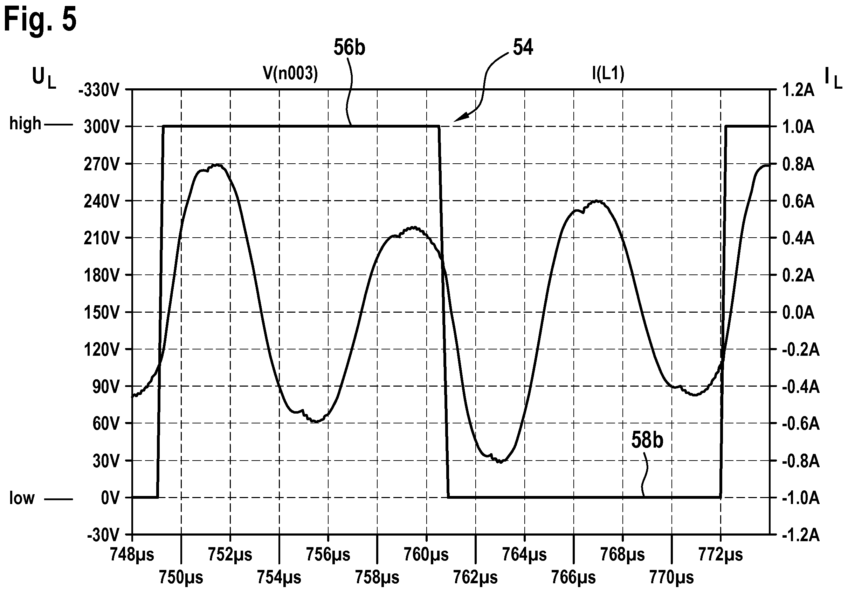

Eine allgemeine Bedingung zur Ansteuerung des Wechselrichterschaltung 18 für den quasiresonanten Betrieb während des Stromschwanzes in der zweiten Phase II ist demnach, dass die Schaltzustände "low" periodisch für eine ungerade Mehrzahl von Halbwellen anstehen müssen. So ergibt sich gemäß Figur 5 eine weitere Reduzierung des Ladestroms I_{L} auf ein Drittel des Ladestroms I_{L} gemäß Figur 3, wenn periodisch drei aufeinander folgenden Halbwellen 56b mit dem Schaltzustand "high" drei Halbwellen 58c mit dem Schaltzustand "low" aufeinander folgen.

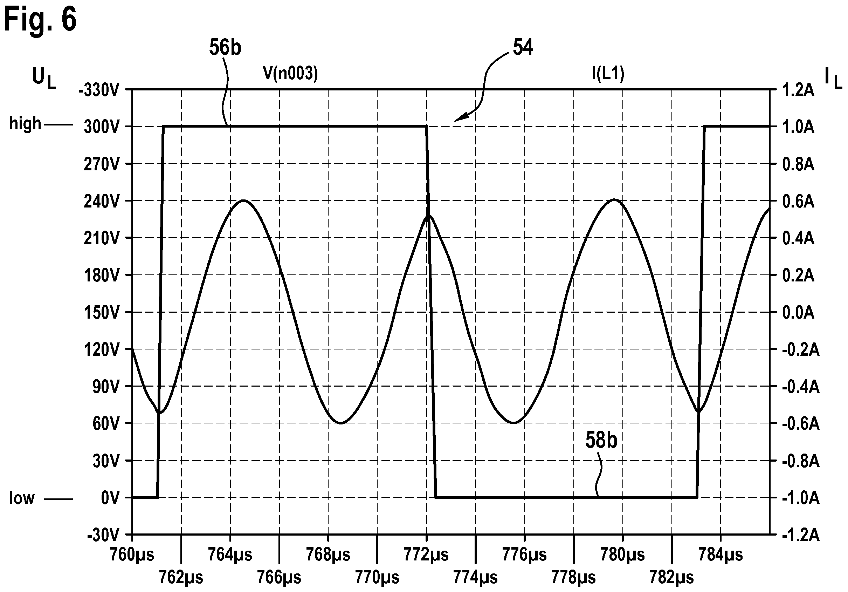

Noch geringere Ladeströme I_{L} sind erzielbar, wenn zusätzlich ein Frequenzshift durchgeführt wird, also der quasiresonante Betrieb verlassen wird. Dies zeigt Figur 6, in der periodisch drei aufeinander folgenden Halbwellen 56b mit dem Schaltzustand "high" drei Halbwellen 58c mit dem Schaltzustand "low" aufeinander folgen.

Es sei abschließend darauf hingewiesen, dass die gezeigten Ausführungsbeispiele weder auf die Figuren 1 bis 6 noch auf die gezeigten Halbwellenfolgen beschränkt sind. So sind entsprechende Resultate auch für 5 und mehr ungerade, aufeinander folgende Halbwellen erzielbar. Zudem ist die Erfindung ebenso auf induktive Ladevorgänge in Koffern, Verpackungen oder dergleichen anwendbar.

## Patentansprüche

1. Induktionsladegerät (12) zur induktiven Energieübertragung auf eine Induktionsakkuvorrichtung (14), mit zumindest einer primären Schwingkreisschaltung (42), die zumindest einer Ladespule (16) aufweist, und mit einer Steuer- oder Regeleinheit (48) zur Ansteuerung der primären Schwingkreisschaltung (42) mittels einer Wechselrichterschaltung (32, 34), wobei eine anregende Frequenz (fₐ) eines aus Halbwellen (56a, 56b, 58a, 58b) bestehenden, pulsweitenmodulierten Ausgangssignals (54) der Wechselrichterschaltung (32, 34) im Wesentlichen einer Resonanzfrequenz (f_{R}) der primären Schwingkreisschaltung (32, 34) entspricht, und wobei die Steuer- oder Regeleinheit (48) die Wechselrichterschaltung (32, 34) nach dem Erreichen einer Ladeschlussspannung (U_{LT}) der Induktionsakkuvorrichtung (14) zur Verringerung eines Ladestroms (I_{L}) derart ansteuert, dass das Ausgangssignal (54) periodisch zumindest eine erste Halbwelle (56a, 56b) auf einen hohen Wert (high) und unmittelbar daran anschließend eine ungerade Mehrzahl aufeinander folgender Halbwellen (58b) auf einen gegenüber dem hohen Wert (high) verringerten Wert (low) gesetzt ist, **dadurch gekennzeichnet, dass** periodisch einer ungeraden Anzahl aufeinander folgender erster Halbwellen (56b) mit einem hohen Wert (low) mindestens drei Halbwellen (58b) mit gegenüber dem hohen Wert (high) verringertem Wert (low) aufeinander folgen.

2. Induktionsladegerät (12) nach Anspruch 1, **dadurch gekennzeichnet, dass** die Steuer- oder Regeleinheit (48) die anregende Frequenz (fₐ) des Ausgangssignal (54) der Wechselrichterschaltung (32, 34) nach dem Erreichen der Ladeschlussspannung (U_{LT}) im Wesentlichen konstant hält.

3. Induktionsladegerät (12) nach Anspruch 1, **dadurch gekennzeichnet, dass** die Steuer- oder Regeleinheit (48) die anregende Frequenz (fₐ) des Ausgangssignals (54) der Wechselrichterschaltung (32, 34) nach dem Erreichen der Ladeschlussspannung (U_{LT}) gegenüber der Resonanzfrequenz (f_{R}) verstimmt.

4. Induktionsladevorrichtung (10), insbesondere Handwerkzeugsinduktionsladevorrichtung (11), mit zumindest einem Induktionsladegerät (12) nach einem der vorherigen Ansprüche 1 bis 3 und einer Induktionsakkuvorrichtung (14).

5. Verfahren zum induktiven Aufladen einer Induktionsakkuvorrichtung (14) mittels eines eine Wechselrichterschaltung (32, 34) und zumindest eine primäre Schwingkreisschaltung (42) aufweisenden Induktionsladegeräts (12) mit folgenden Schritten:
- Laden der Induktionsakkuvorrichtung (14) in einer ersten Phase (I) mit einem im Wesentlichen konstanten Ladestrom (I_{L}) derart, dass eine anregende Frequenz (fₐ) eines aus Halbwellen (56a, 56b, 58a, 58b) bestehenden pulsweitenmodulierten Ausgangssignals (54) der Wechselrichterschaltung (32, 34) zur Ansteuerung der primären Schwingkreisschaltung (42) im Wesentlichen einer Resonanzfrequenz (f_{R}) der primären Schwingkreisschaltung (42) entspricht,
- Laden der Induktionsakkuvorrichtung (14) nach dem Erreichen einer Ladeschlussspannung (U_{LT}) der Induktionsakkuvorrichtung (14) in einer zweiten Phase (II) mit einem gegenüber dem Ladestrom (I_{L}) der ersten Phase verringerten Ladestrom (I_{L}) derart, dass das Ausgangssignal (54) der Wechselrichterschaltung (32, 34) periodisch zumindest eine erste Halbwelle (56a, 56b) auf einen hohen Wert (high) und unmittelbar daran anschließend eine ungerade Mehrzahl aufeinander folgender Halbwellen (58b) auf einen gegenüber dem hohen Wert (high) verringerten Wert (low) gesetzt wird, wobei periodisch einer ungeraden Anzahl aufeinander folgender erster Halbwellen (56b) mit einem hohen Wert (high) mindestens drei Halbwellen (58b) mit gegenüber dem hohen Wert (high) verringertem Wert (low) aufeinander folgen.

6. Verfahren nach Anspruch 5, **dadurch gekennzeichnet, dass** die anregende Frequenz (fₐ) des Ausgangssignal (54) der Wechselrichterschaltung (32, 34) nach dem Erreichen der Ladeschlussspannung (U_{LT}) im Wesentlichen konstant bleibt.

7. Verfahren nach Anspruch 5, **dadurch gekennzeichnet, dass die** anregende Frequenz (fₐ) des Ausgangssignals (54) der Wechselrichterschaltung (32, 34) nach dem Erreichen der Ladeschlussspannung (U_{LT}) gegenüber der Resonanzfrequenz (f_{R}) verstimmt wird.

## Claims

1. Induction charger (12) for the inductive transfer of energy to an induction battery device (14), having at least one primary resonant circuit (42) that has at least one charging coil (16), and having a control or regulation unit (48) for driving the primary resonant circuit (42) by way of an inverter circuit (32, 34), wherein an excitation frequency (fₐ) of a pulse width-modulated output signal (54), consisting of half-waves (56a, 56b, 58a, 58b), of the inverter circuit (32, 34) corresponds substantially to a resonant frequency (f_{R}) of the primary resonant circuit (32, 34), and wherein the control or regulation unit (48) drives the inverter circuit (32, 34), after an end-of-charge voltage (U_{LT}) of the induction battery device (14) is reached, to reduce a charging current (I_{L}) such that the output signal (54) periodically at least one first half-wave (56a, 56b) is set to a high value (high) and immediately afterwards an odd number of consecutive half-waves (58b) are set to a lower value (low) than the high value (high), **characterized in that** an odd number of consecutive first half-waves (56b) with a high value (low) is periodically followed by at least three half-waves (58b) with a lower value (low) than the high value (high).

2. Induction charger (12) according to Claim 1, **characterized in that** the control or regulation unit (48) keeps the excitation frequency (fₐ) of the output signal (54) of the inverter circuit (32, 34) substantially constant after the end-of-charge voltage (U_{LT}) is reached.

3. Induction charger (12) according to Claim 1, **characterized in that** the control or regulation unit (48) detunes the excitation frequency (fₐ) of the output signal (54) of the inverter circuit (32, 34) from the resonant frequency (f_{R}) after the end-of-charge voltage (U_{LT}) is reached.

4. Induction charging device (10), in particular handheld tool induction charging device (11), having at least one induction charger (12) according to one of the preceding Claims 1 to 3 and an induction battery device (14) .

5. Method for inductively charging an induction battery device (14) by way of an induction charger (12) having an inverter circuit (32, 34) and at least one primary resonant circuit (42), having the following steps:
- charging the induction battery device (14) in a first phase (I) with a substantially constant charging current (I_{L}) such that an excitation frequency (fₐ) of a pulse width-modulated output signal (54), consisting of half-waves (56a, 56b, 58a, 58b), of the inverter circuit (32, 34) for driving the primary resonant circuit (42) corresponds substantially to a resonant frequency (f_{R}) of the primary resonant circuit (42),
- charging the induction battery device (14) after an end-of-charge voltage (U_{LT}) of the induction battery device (14) is reached in a second phase (II) with a charging current (I_{L}) lower than the charging current (I_{L}) of the first phase, such that the output signal (54) of the inverter circuit (32, 34) periodically at least one first half-wave (56a, 56b) is set to a high value (high) and immediately afterwards an odd number of consecutive half-waves (58b) are set to a lower value (low) than the high value (high), wherein an odd number of consecutive first half-waves (56b) with a high value (high) is periodically followed by at least three half-waves (58b) with a lower value (low) than the high value (high).

6. Method according to Claim 5, **characterized in that** the excitation frequency (fₐ) of the output signal (54) of the inverter circuit (32, 34) remains substantially constant after the end-of-charge voltage (U_{LT}) is reached.

7. Method according to Claim 5, **characterized in that** the excitation frequency (fₐ) of the output signal (54) of the inverter circuit (32, 34) is detuned from the resonant frequency (f_{R}) after the end-of-charge voltage (U_{LT}) is reached.

## Revendications

1. Appareil de charge par induction (12) pour la transmission d'énergie par induction à un dispositif accumulateur à induction (14), comprenant au moins un circuit primaire d'oscillation (42) présentant au moins une bobine de charge (16), et une unité de commande ou de régulation (48) pour piloter le circuit primaire d'oscillation (42) au moyen d'un circuit onduleur (32, 34), dans lequel une fréquence d'excitation (fₐ) d'un signal de sortie (54) composé de demi-ondes (56a, 56b, 58a, 58b) et modulé en largeur d'impulsion du circuit onduleur (32, 34) correspond substantiellement à une fréquence de résonance (f_{R}) du circuit primaire d'oscillation (32, 34), et dans lequel, après qu'une tension finale de charge (U_{LT}) du dispositif accumulateur à induction (14) a été atteinte, l'unité de commande ou de régulation (48) pilote le circuit onduleur (32, 34) pour diminuer un courant de charge (I_{L}) de telle sorte que le signal de sortie (54) périodiquement au moins une première demi-onde (56a, 56b) est réglé sur une valeur haute (high) et immédiatement après une pluralité impaire de demi-ondes successives (58b) est réglé sur une valeur (low) diminuée par rapport à la valeur haute (high), **caractérisé en ce que** périodiquement un nombre impair de premières demi-ondes successives (56b) d'une valeur haute (low) est suivi d'au moins trois demi-ondes (58b) successives d'une valeur (low) diminuée par rapport à la valeur haute (high).

2. Appareil de charge par induction (12) selon la revendication 1, **caractérisé en ce que** l'unité de commande ou de régulation (48) maintient la fréquence d'excitation (fₐ) du signal de sortie (54) du circuit onduleur (32, 34) substantiellement constante après que la tension finale de charge (U_{LT}) a été atteinte.

3. Appareil de charge par induction (12) selon la revendication 1, **caractérisé en ce que** l'unité de commande ou de régulation (48) dérègle la fréquence d'excitation (fₐ) du signal de sortie (54) du circuit onduleur (32, 34) par rapport à la fréquence de résonance (f_{R}) après que la tension finale de charge (U_{LT}) a été atteinte.

4. Dispositif de charge par induction (10), en particulier dispositif de charge par induction d'un outil à main (11), comprenant au moins un appareil de charge par induction (12) selon l'une quelconque des revendications 1 à 3 et un dispositif accumulateur à induction (14).

5. Procédé de charge par induction d'un dispositif accumulateur par induction (14) au moyen d'un appareil de charge par induction (12) présentant un circuit onduleur (32, 34) et au moins un circuit primaire d'oscillation (42), comprenant les étapes suivantes consistant à :
- charger le dispositif accumulateur à induction (14) dans une première phase (I) par un courant de charge (I_{L}) substantiellement constant de telle sorte qu'une fréquence d'excitation (fₐ) d'un signal de sortie (54) composé de demi-ondes (56a, 56b, 58a, 58b) et modulé en largeur d'impulsion (54) du circuit onduleur (32, 34) pour piloter le circuit primaire d'oscillation (42) correspond substantiellement à une fréquence de résonance (f_{R}) du circuit primaire d'oscillation (42),
- charger le dispositif accumulateur à induction (14) après qu'une tension finale de charge (U_{LT}) du dispositif accumulateur à induction (14) a été atteinte dans une deuxième phase (II) par un courant de charge (I_{L}) diminué par rapport au courant de charge (I_{L}) de la première phase de telle sorte que le signal de sortie (54) du circuit onduleur (32, 34) périodiquement au moins une première demi-onde (56a, 56b) est réglé sur une valeur haute (high) et immédiatement après une pluralité impaire de demi-ondes successives (58b) est réglé sur une valeur (low) diminuée par rapport à la valeur haute (high), dans lequel périodiquement un nombre impair de premières demi-ondes successives (56b) d'une valeur haute (high) est suivi d'au moins trois demi-ondes successives (58b) d'une valeur (low) diminuée par rapport à la valeur haute (high).

6. Procédé selon la revendication 5, **caractérisé en ce que** la fréquence d'excitation (fₐ) du signal de sortie (54) du circuit onduleur (32, 34) reste substantiellement constant après que la tension finale de charge (U_{LT}) a été atteinte.

7. Procédé selon la revendication 5, **caractérisé en ce que** la fréquence d'excitation (fₐ) du signal de sortie (54) du circuit onduleur (32, 34) est déréglée par rapport à la fréquence de résonance (f_{R}) après que la tension finale de charge (U_{LT}) a été atteinte.
